# DEMANDE DE BREVET EUROPEEN

(11) **EP 3 594 049 A1**
(43) Date de publication de la demande: **15.01.2020**
(21) Numéro de dépôt: 19183933.1
(22) Date de dépôt: 02.07.2019
(51) Int. Cl.: B60N 2/01, B60N 2/22, B60N 2/34, B64D 11/06, B60N 2/02, B60N 2/90

(54) **ENSEMBLE DE FAUTEUILS COMPORTANT UN ELEMENT D'EXTENSION D'ASSISE MOBILE**

(30) Priorité: 11.07.2018 FR 1856381
(71) Demandeur: Stelia Aerospace, 17300 Rochefort (FR)
(72) Inventeur: VIGNON, Laurent, 17139 DOMPIERRE SUR MER (FR)
(74) Mandataire: Ipside

(57) **Abrégé**

Un ensemble (100) comporte une pluralité de fauteuils (10, 10P) agencés en rangs décalés entre eux suivant une direction longitudinale X et en lignes (110a, 110b, 110c) parallèles à la direction longitudinale X. Dans cet ensemble tous les fauteuils sont orientés suivant la direction longitudinale X, et les fauteuils des rangs successifs sont agencés en quinconce. Au moins un fauteuil (10) comporte une position siège et une position repos ou lit dans laquelle l'assise (21) est avancée longitudinalement.

L'assise (21) du fauteuil (10) comporte :
- une assise principale (210) comportant au moins une échancrure (215) à l'avant et latéralement sur ladite assise principale ;
- au moins une extension latérale (40), comportant une position dans laquelle l'extension latérale (40) occupe l'emplacement de l'échancrure (215) lorsque le fauteuil (10) est en position siège, et comportant une seconde position dans laquelle l'extension latérale est reculée et située contre le bord latéral de l'assise principale (210) lorsque le fauteuil est en position lit.

## Description

### Domaine de l'invention

L'invention appartient au domaine de l'aménagement des espaces passagers des véhicules de transport de personnes.

L'invention concerne en particulier un ensemble de fauteuils dans lequel les fauteuils, offrant une position repos ou lit, ont des surfaces d'assise présentant une forme différente suivant que le fauteuil est dans une position conventionnelle de siège ou une position repos ou lit.

Plus particulièrement dans l'invention, un fauteuil comporte un élément d'extension de son assise qui permet de modifier automatiquement la forme de l'assise suivant la position du fauteuil pour le confort de la position siège et pour respecter des contraintes d'environnement dans la position lit.

### Art antérieur

L'aménagement des cabines de transport de passagers est confronté au maintien d'un confort suffisant du passager pour offrir des conditions attractives en particulier lorsqu'il doit être supporté des voyages relativement longs, voire des durées de voyage couvrant une période de sommeil.

Une telle situation est susceptible de se trouver par exemple dans les voyages en autocars, les traversées maritimes et les vols moyen ou long courrier en avion.

Pour améliorer le confort des passagers dans ces conditions, il est connu de proposer des fauteuils qui comportent une position lit à la demande du passager, dans laquelle le passager peut s'étendre plus ou moins totalement pour adopter une position plus propice au repos que la position assis, obtenue par des mouvements relatifs de l'assise du siège et de son dossier.

Il est connu par exemple d'organiser un agencement en quinconce des fauteuils de deux rangs voisins de sorte que, lorsque les sièges sont convertis en lit, le passager place ses pieds sur un coté du siège du fauteuil situé devant lui. Dans ce cas, une zone pour le placement des pieds se trouve au niveau d'une zone large du dossier d'un rang voisin ce qui permet de limiter la largeur totale du fauteuil à une dimension inférieure à deux fois la largeur maximale du dossier des sièges.

Toutefois, un tel arrangement en quinconce présente des risques d'interférences de la structure de l'assise d'un siège avec les structures du fauteuil situé devant en raison du déplacement vers l'avant de l'assise lors de la conversion en lit.

Pour éviter ces interférences, il est alors nécessaire de maintenir une distance de séparation suffisante entre les rangs de fauteuil, et ou de limiter les amplitudes des mouvements de l'assise, et ou les dimensions de l'assise.

Ainsi une partie des gains possibles sur la densité et ou le confort de l'aménagement d'une cabine est perdue.

Il est également connu de réaliser des assises comportant une échancrure de sorte à éviter une interférence en position lit avec la structure du fauteuil en avant.

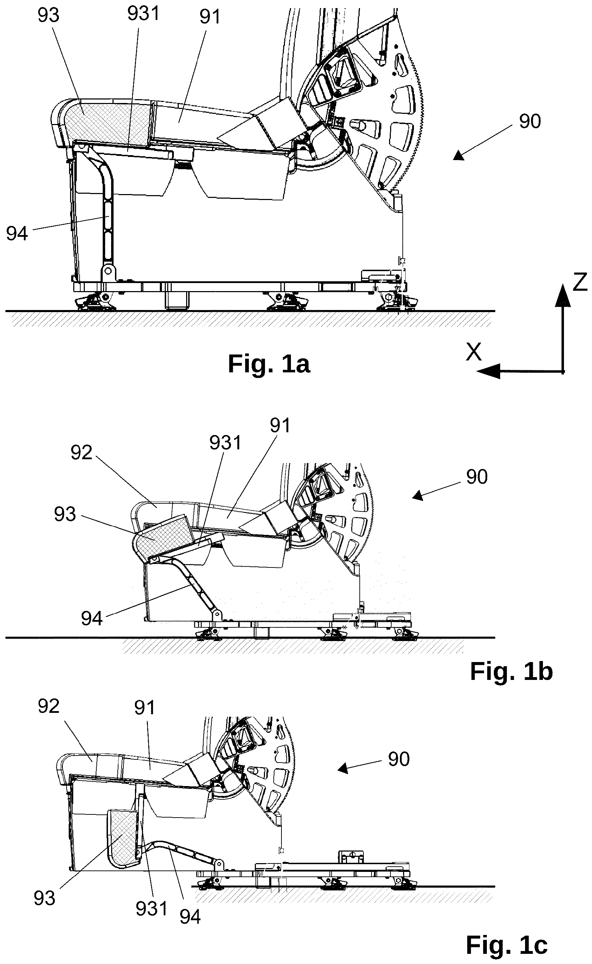

Pour donner une forme confortable en position siège, il est alors placé un coussin à la place libérée par l'échancrure, le coussin étant monté articulé pour s'effacer automatiquement vers le bas et vers l'arrière au moyen d'une bielle articulée lorsque la structure du siège est déplacée vers l'avant. Les figures 1a, 1b et 1c illustrent une vue de profil d'un tel fauteuil 90 dans lequel le coussin mobile 93 est placé dans l'échancrure 92 de l'assise 91 lorsque le fauteuil est en position siège, figure 1a, en position stockée pour libérer l'échancrure 92 de l'assise lorsque le fauteuil est en position lit, figure 1c, et dans une position intermédiaire entre les deux positions précédentes pendant la transition, figure 1b. Dans le fauteuil 90, le support 931 du coussin est articulé sur l'assise 91 et la bielle 94 est articulée sur le support 931 et en un point fixe par rapport auquel l'assise se déplace vers l'avant.

Cette solution présente cependant les inconvénients d'exposer le coussin mobile aux salissures en plaçant celui-ci proche du sol, et le mécanisme pour déplacer le coussin mobile peut présenter des risques pour l'utilisateur, en particulier de coincement de la main ou d'un doigt. En outre la surface utile de l'assise s'en trouve réduite lorsque le coussin mobile est dans la position stockée.

### Exposé de l'invention

La présente invention concerne un ensemble de fauteuils qui a pour objet de remédier à ces inconvénients en conservant un confort optimal pour le passager sans limiter les gains de densité d'un aménagement d'une cabine mettant en oeuvre ledit ensemble de fauteuils.

Suivant l'invention, l'ensemble comporte une pluralité de fauteuils agencés en rangs décalés entre eux suivant une direction longitudinale X et en lignes parallèles à la direction longitudinale X. Dans cet ensemble tous les fauteuils sont orientés sensiblement suivant la direction longitudinale X, et les fauteuils d'un rang sont agencés sur des lignes de fauteuils décalées par rapport aux lignes sur lesquelles sont agencés les fauteuils d'un autre rang le suivant immédiatement dans l'ensemble de sorte que les fauteuils de l'ensemble sont agencés en quinconce. En outre, au moins un fauteuil de l'ensemble comporte une position siège et au moins une position repos ou lit dans laquelle position repos ou lit une assise dudit fauteuil est avancée suivant la direction longitudinale X par rapport à la position siège.

Plus particulièrement dans l'ensemble de l'invention, l'assise dudit fauteuil comporte :
- une assise principale, solidaire d'une structure porteuse du fauteuil, comportant au moins une échancrure sur un bord latéral de l'assise principale et située dans une partie avant de ladite assise principale ;
- au moins une extension latérale, solidaire de l'assise principale, comportant :
   + une première position dans laquelle ladite extension latérale occupe l'emplacement de l'au moins une échancrure lorsque le fauteuil est en position siège, et ;
   + au moins une seconde position dans laquelle ladite extension latérale est située contre le bord latéral de l'assise principale du côté de ladite assise principale comportant l'au moins une échancrure, ladite seconde position étant reculée par rapport à la première position relativement à ladite assise principale, lorsque le fauteuil est dans une position repos ou lit.

Ainsi dans l'ensemble de fauteuils de l'invention, il est obtenu que la forme de l'assise d'un fauteuil s'adapte à l'environnement du fauteuil, perturbé par la présence d'autres fauteuils dans l'ensemble, tout en conservant sensiblement la même surface totale de l'assise pour maintenir le confort de l'occupant du fauteuil.

L'ensemble comporte avantageusement toute ou partie des caractéristiques suivantes, pour autant qu'elles soient techniquement opérables lorsqu'elles sont prises en combinaison :
- une découpe de l'au moins une échancrure correspond, en creux, sensiblement à une forme d'une zone d'engagement d'une structure arrière d'un fauteuil du rang immédiatement devant le fauteuil considéré, lorsque l'assise est dans une position avancée maximale, de sorte qu'un jeu positif ou nul est maintenu entre l'assise principale et ladite structure arrière dans ladite position avancée maximale ;
- la zone d'engagement correspond à une partie d'une structure d'habillage du fauteuil du rang immédiatement devant ;
- lorsque l'assise est dans la position avancée maximale, un bord avant de l'assise principale, ou un bord avant d'un repose jambes associé à ladite assise principale, accoste une partie arrière de la structure d'un caisson latéral d'un fauteuil du rang immédiatement devant ;
- lorsque l'assise est dans une position avancée maximale, l'élément d'extension forme une extension latérale de l'assise du fauteuil ;
- la position avancée maximale est obtenue lorsque le fauteuil est dans la configuration lit ;
- un dispositif de guidage des mouvements de l'au moins un élément d'extension détermine les déplacements dudit élément d'extension par rapport à l'assise principale entre la première position et la seconde position de cet élément d'extension ;
- le dispositif de guidage comporte des moyens de rappel élastique entre l'assise principale et l'élément d'extension, maintenant ledit élément d'extension dans la première position, en absence d'un autre effort appliqué audit élément d'extension ;
- le dispositif de guidage comporte une ou des glissières de guidage solidaires de l'assise principale dans lesquelles circulent des galets ou patins solidaires de l'élément d'extension, l'agencement desdites glissières et desdits galets ou patins déterminant une trajectoire de l'élément d'extension par rapport à l'assise principale entre la première position et la seconde position dudit élément d'extension ;
- les glissières sont fixes par rapport à l'assise principale et déterminent la trajectoire de l'élément d'extension par des formes desdites glissières ;
- au moins une glissière est fixée par un point pivot à l'assise principale ;
- l'élément d'extension est libre de se déplacer de la première position vers la seconde position sous l'effet d'une force extérieure orientée vers l'arrière, appliquée sur un bord avant dudit élément d'extension ;
- le dispositif de guidage comporte au moins un câble ou une bielle agencé pour limiter, dans un repère absolu de l'ensemble, le déplacement vers l'avant de l'élément d'extension en deçà d'une position prédéfinie lorsque l'assise principale est déplacée vers l'avant ;
- l'assise principale comporte deux échancrures agencées sensiblement symétriquement par rapport à un axe longitudinal de l'assise, et ladite assise comporte deux éléments d'extension, correspondant chacun à une des échancrures de l'assise principale ;
- les fauteuils sont agencés suivant deux lignes parallèles et en rangs comportant un seul fauteuil, les assises desdits fauteuils comportant une échancrure alternativement d'un côté droit et d'un côté gauche de l'assise, pour chaque fauteuil du côté du dossier du fauteuil du rang immédiatement devant ;
- les fauteuils sont agencés en quinconce suivant 3 lignes ou plus parallèles, en rangs comportant N fauteuils, N égal ou supérieur à deux, alternés avec des rangs comportant N-1 ou N fauteuils, les assises desdits fauteuils comportant :
   ∘ une échancrure sur un bord gauche de l'assise principale de ladite assise pour les fauteuils dont la partie siège est situées à une extrémité droite d'un rang ;
   ∘ une échancrure sur un bord droit de l'assise principale de ladite assise pour les fauteuils dont la partie siège est située à une extrémité gauche ;
   ∘ une échancrure sur un bord droit et une échancrure sur un bord gauche de l'assise principale de ladite assise pour les autres fauteuils le cas échéant.

Il est ainsi obtenu diverses configurations de l'ensemble de fauteuils dans lequel tous les fauteuils bénéficient de l'élargissement de l'assise en position lit ou repos.

### Présentation des figures

L'invention est décrite de manière détaillée à l'appui d'exemples non limitatifs de formes de réalisation en référence aux dessins qui représentent de manière schématique :
- les figures 1a, 1b, 1c : déjà citées, une vue partielle de profil d'un fauteuil connu dont le bord avant de l'assise comporte une échancrure et un coussin mobile articulé placé dans l'échancrure, figure 1a, partiellement descendu, figure 1b, et totalement descendu, figure 1c, pour différentes positions plus ou moins avancées du fauteuil ;
- la figure 2a : un fauteuil de l'invention comportant un caisson latéral, représenté en vue isométrique en position siège et montrant l'élément d'extension en place dans l'échancrure de l'assise ;
- la figure 2b : un ensemble de trois fauteuils de l'invention représenté en vue dessus en position siège agencés en quinconce suivant un agencement relatif typique de l'agencement dans une cabine pour passagers ;
- les figures 3a et 3b : figure 3a, une illustration en vue de dessus montrant l'assise d'un fauteuil de l'invention, dans la position siège, en arrière d'un fauteuil, partiellement visible, situé en avant comme dans l'ensemble de la figure 2b ; figure 3b, une représentation schématique de l'assise montrant l'élément d'extension de l'assise dans l'échancrure de l'assise principale et des moyens de guidage du déplacement relatif entre l'élément d'extension et l'assise principale ;
- la figure 4 : une illustration similaire à la représentation de la figure 3a dans laquelle l'assise est avancée sans risque d'interférence avec la structure du fauteuil situé en avant ;
- les figures 5a et 5b : figure 5a, une illustration similaire à l'illustration de la figure 4 dans lequel l'assise est plus avancée avec l'élément d'extension partiellement reculé et décalé latéralement pour éviter une interférence de l'assise avec la structure du fauteuil situé en avant ; figure 5b, la représentation schématique de la figure 3b montrant l'élément d'extension déplacé par rapport à l'assise principale comme sur la figure 5a ;
- les figures 6a et 6b : figure 6a, une illustration similaire à l'illustration de la figure 5a dans lequel l'assise est avancée pour accoster la structure du fauteuil en avant dans la zone du repose pieds du caisson latéral, avec l'élément d'extension reculé et décalé latéralement dans une position stockée pour libérer l'échancrure de l'assise principale contournant la structure du fauteuil situé en avant ; figure 6b, la représentation schématique des figures 3b et 5b montrant l'élément d'extension déplacé par rapport à l'assise principale comme sur la figure 6a ;
- les figures 7a à 7d : des exemples d'ensembles de fauteuils suivant l'invention pour différentes configurations de nombre de fauteuils par rang.

Sur les figures, les dessins ne sont pas nécessairement représentés à la même échelle.

Sur les figures des parties ou éléments similaires, même représentés dans des formes différentes, portent le même repère.

Les figures sont des représentations simplifiées sur lesquels les formes et éléments de détails non nécessaires à la compréhension de l'invention ne sont pas représentés.

Pour les besoins de distinguer un fauteuil d'un autre fauteuil similaire, un indice P sera ajouté aux repères relatifs à un fauteuil situé devant un fauteuil auquel il est fait référence. Ainsi le fauteuil situé devant un fauteuil 10 sera désigné « fauteuil 10P » pour s'en distinguer.

### Description détaillée d'un mode de réalisation

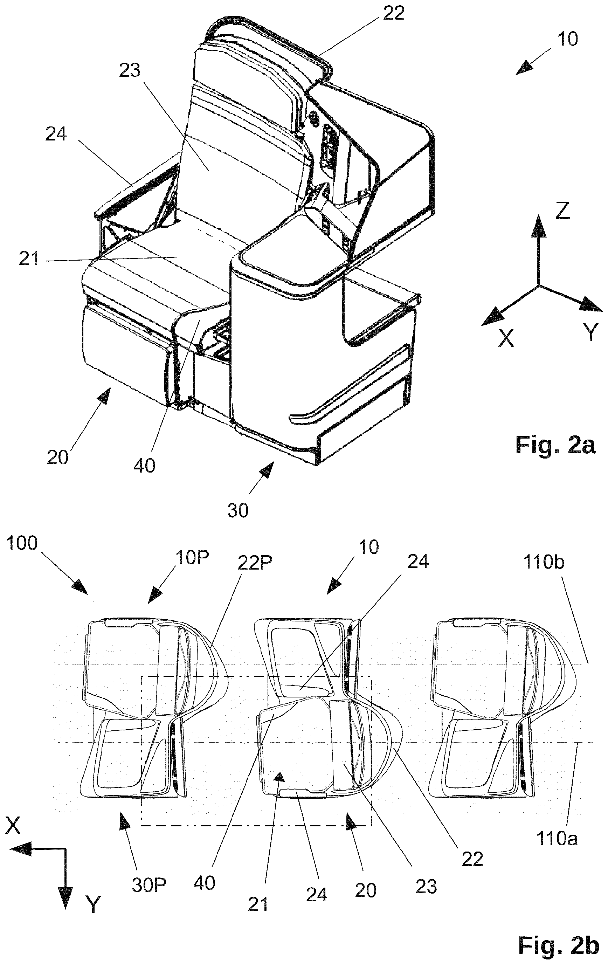

La figure 2a illustre en vue isométrique un fauteuil 10 isolé comportant une partie siège 20 et un caisson latéral 30.

Un tel fauteuil est par exemple installé dans une cabine d'aéronef en ligne avec d'autres fauteuils du même type pour former un ensemble 100 de fauteuils, mais dont les positions relatives des parties siège et des caissons latéraux sont ici inversées entre deux fauteuils de rangs successifs dans ledit ensemble comme dans l'exemple d'agencement illustré sur la figure 2b.

Les parties siège 20 d'une part et les caissons latéraux 30 d'autre part sont ainsi agencés en quinconce suivant deux lignes 110a, 110b parallèles orientées suivant un axe longitudinal X d'un système d'axes lié à l'ensemble de fauteuils.

Dans l'ensemble considéré, les fauteuils sont sensiblement orientés dans un même sens de sorte que des passagers occupant les différents fauteuils de l'ensemble de fauteuil regardent sensiblement tous dans une même direction vers l'avant.

Dans la suite de la description, il sera fait autant que de besoin référence à un système d'axes lié à l'ensemble de sièges dans lequel la direction de l'axe longitudinal X correspond à une direction longitudinale de l'ensemble 100 de fauteuils 10 et aux directions des lignes 110a, 110b de sièges de l'ensemble 100.

L'axe longitudinal X est orienté positif vers l'avant de l'ensemble 100 qui correspond sensiblement vers l'avant des fauteuils, l'avant étant la direction vers l'avant telle qu'elle est comprise par un occupant d'un fauteuil, tous les fauteuils de l'ensemble considéré étant orientés sensiblement dans un même sens.

Le système d'axes comporte également un axe vertical Z, perpendiculaire à l'axe longitudinal X, suivant une direction verticale et orienté positivement vers le haut.

Le système d'axes comporte un axe latéral Y dans un plan horizontal et orienté positivement vers la gauche, pour un occupant d'un fauteuil, de sorte à former un trièdre direct XYZ.

Dans les fauteuils illustrés, le caisson latéral 30 du fauteuil 10 comporte un volume creux, ouvert vers l'arrière, dans lequel un passager d'un fauteuil situé derrière peut placer ses jambes ou ses pieds lorsqu'il est étendu, possibilité résultant de la disposition en quinconce des fauteuils de l'ensemble 100.

De manière connue, lorsque le fauteuil est placé dans une configuration lit, une assise 21 du fauteuil est avancée et un dossier 23 du fauteuil est incliné vers l'arrière pour former tout ou partie d'un plan sur lequel le passager peut s'étendre.

L'extension vers l'arrière d'un fauteuil 10 est ici délimitée par une structure d'habillage qui sera plus particulièrement considérée dans une zone du dossier 22 du fauteuil par la suite.

Du fait de la morphologie d'un individu, la largeur du caisson latéral 30, adaptée au placement des pieds, est inférieure à la largeur de la partie siège 20, adaptée à la largeur du buste et du bassin des passagers, afin de gagner sur la largeur totale du fauteuil.

Il résulte dans cet exemple, en fonction des dimensions des composants du fauteuil et de leurs amplitudes de déplacement, lors des mouvements de conversion vers la position lit, des risques d'interférences entre, en particulier, l'assise 21 du siège qui est déplacée vers l'avant et la structure du fauteuil 10P situé devant, notamment l'habillage du dossier 22P, plus large que le caisson latéral 30P.

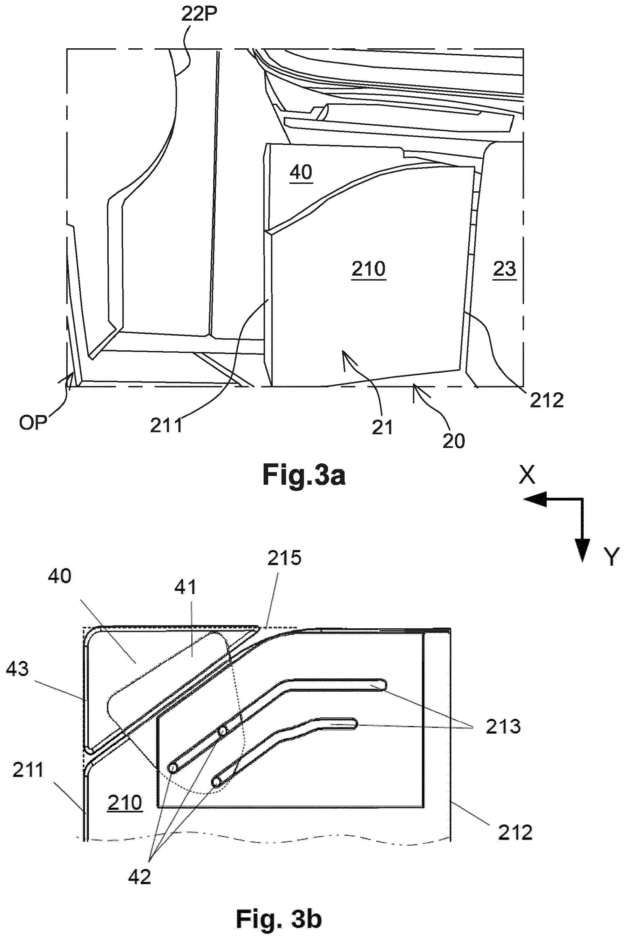

La figure 3a représente en vue de dessus une assise 21 d'un fauteuil 10 dans la position d'utilisation conventionnelle dudit fauteuil pour un occupant assis, cas du fauteuil 10 au centre sur la figure 2b.

Le fauteuil est placé dans un environnement, correspondant à sa situation dans l'ensemble 100 illustré sur la figure 2b, qui comporte devant lui un autre fauteuil 10P dont la partie siège et le caisson latéral sont inversé. La partie siège 20 du fauteuil 10 comporte un dossier 23 du siège à l'arrière de l'assise, des accoudoirs latéraux 24 du siège dont seul l'accoudoir droit est représenté sur la figure 3a, et à l'avant, distant d'une distance de séparation pour offrir un espace de mobilité à l'occupant du fauteuil, le fauteuil 10P, précédant le fauteuil 10 considéré, dont est représenté une partie arrière du caisson latéral 30P et une partie arrière du dossier 22P.

La représentation de la figure 3a correspond sensiblement à la zone encadrée par un trait discontinu sur la figure 2b.

L'assise 21, pour sa partie visible, comporte une assise principale 210, laquelle assise principale s'étend, en vue de dessus, depuis un bord avant 211 à l'avant de l'assise jusqu'à un bord arrière 212 de l'assise du côté du dossier 23 du siège, et comporte un élément d'extension 40.

L'élément d'extension 40 est situé sensiblement en vis-à-vis de l'habillage du dossier 22P du fauteuil 10P situé devant, sur le côté droit de l'assise 21 dans l'exemple illustré, et présente une forme complémentaire d'une échancrure 215 formée dans l'assise principale 210 et, dans la position illustrée sur la figure 3a, ledit élément d'extension est situé dans ladite échancrure de sorte à donner à l'assise 21 une forme conventionnelle sans échancrure perceptible pour un occupant du fauteuil.

Plus particulièrement l'échancrure 215 est formée du côté du bord avant 211 et d'un bord latéral de l'assise, et s'étend latéralement vers l'arrière pour donner à ladite échancrure une forme sensiblement triangulaire s'effilant vers l'arrière. La forme préférée de l'échancrure correspond localement à une forme complémentaire de la structure du dossier 22P du fauteuil 10P situé en avant, dans une zone d'engagement de la structure arrière dudit dossier 22P, comme il sera compris par la suite.

En outre, comme schématisé sur la figure 3b, sur laquelle l'assise 21 est représentée partiellement sans coussin ni habillage de protection, l'élément d'extension 40 est monté mobile par rapport à l'assise principale 210 de sorte à être en mesure de suivre, dans un plan sensiblement parallèle à un plan de l'assise, un mouvement de translation principalement vers l'arrière et de translation et ou rotation vers l'extérieur de ladite assise.

Ces capacités de mouvements de l'élément d'extension 40 sont obtenues, dans l'exemple de réalisation de la figure 3b, par des glissières 213 solidaires de l'assise principale 210 dans lesquelles circulent des galets 42 ou des patins d'un support de l'élément d'extension.

Les capacités de déplacement de l'élément d'extension par rapport à l'assise principale sont ainsi déterminées par les formes et positions des glissières et les positions des galets.

Lorsque le fauteuil est converti en position lit, ou une position intermédiaire entre assis et lit, de manière connue, une partie du fauteuil est déplacé vers l'avant, voir les figures 1a à 1c de l'art antérieur, de sorte que l'assise 21 tend à venir refermer l'espace ouvert entre le bord avant 211 de ladite assise et le caisson latéral 30P du fauteuil situé en avant, le dossier 23 étant incliné vers l'arrière.

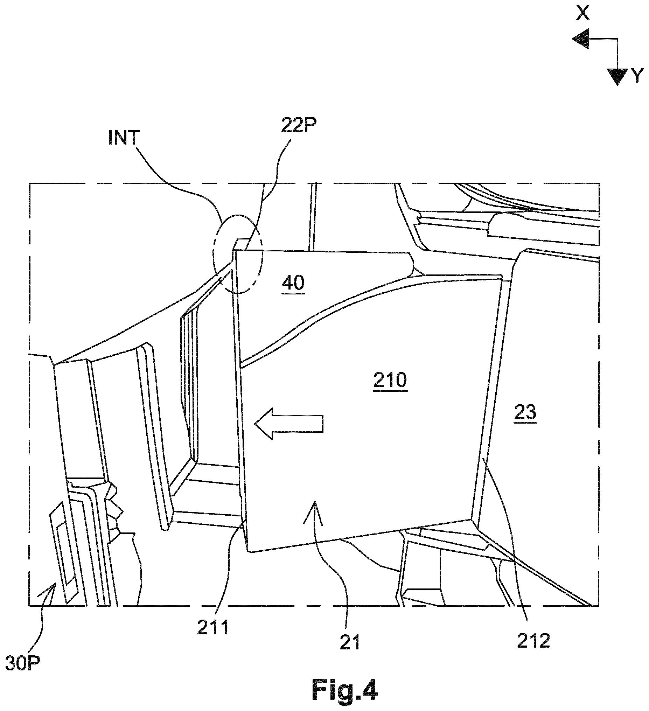

Comme le montre la figure 4 comparée à la figure 3a, le déplacement de l'assise 21 vers l'avant, sens des X positifs matérialisé par la flèche représentée sur ladite assise, est confronté à l'occurrence une interférence INT entre le bord avant 211 de l'assise et la structure du fauteuil 10P situé en avant, dans la zone d'engagement, alors que ladite assise n'a pas encore été suffisamment avancée pour une conversion complète du fauteuil 10.

Plus particulièrement, ladite occurrence se produit ici entre l'élément d'extension 40 et l'habillage du dossier 22P du fauteuil en avant.

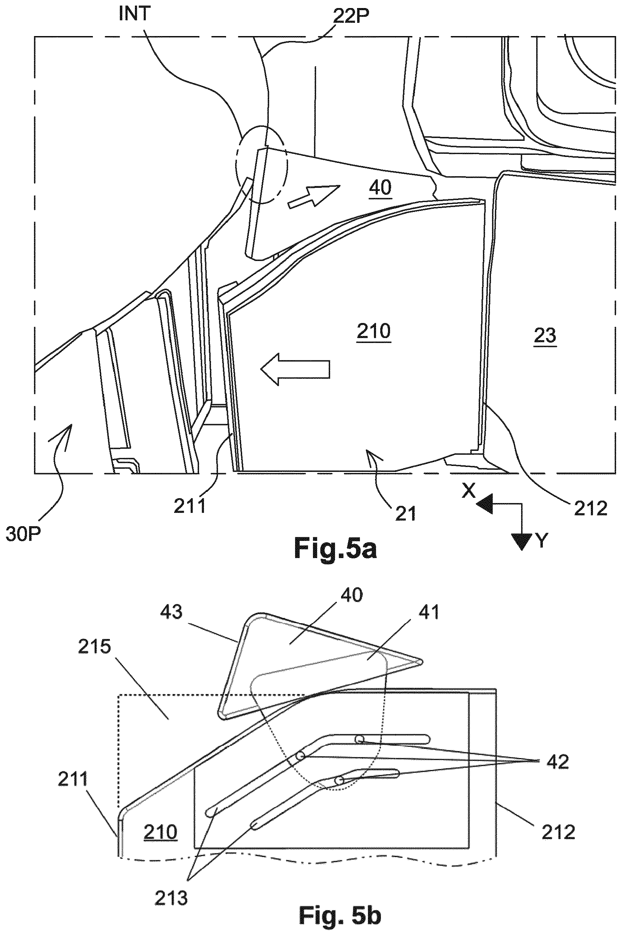

La figure 5a, illustre une position intermédiaire de l'assise 21 plus avancée que sur la figure 4.

Dans ce cas, pour permettre le déplacement de la structure du fauteuil 10 et de l'assise 21, la progression vers l'avant de l'élément d'extension 40 est stoppée alors que l'assise principale 210 est encore déplacée vers l'avant. Dans un référentiel lié à l'assise principale, il est équivalent de dire que, à ce stade du déplacement de l'assise, l'élément d'extension recule d'une amplitude égale au déplacement de l'assise principale vers l'avant dans un référentiel absolu.

Dans ce mouvement relatif, le recul de l'élément d'extension 40, qui est accompagné d'un déplacement latéral et d'une rotation dudit élément d'extension, a pour effet de dégager l'échancrure 215 de l'assise principale 210.

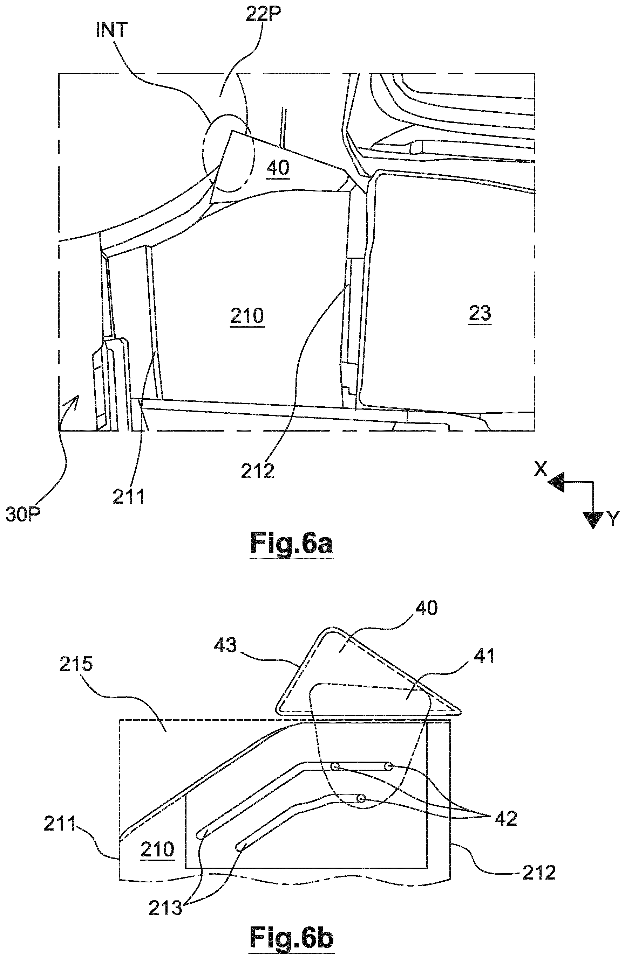

Une forme de l'échancrure 215 est réalisée afin d'éviter l'interférence de l'assise principale 210 avec l'habillage du dossier 22P du fauteuil 10P en avant de sorte que le déplacement de l'assise 21 peut être poursuivi sur la distance souhaitée, par exemple pour venir accoster le caisson latéral 30P du siège en avant formant le logement pour les pieds de l'occupant, comme illustré sur la figure 6a, lorsque l'échancrure 215 est complètement dégagée.

Avantageusement, le déplacement relatif vers l'arrière de l'élément d'extension 40 est associé à un dégagement latéral de sorte que ledit élément d'extension se trouve placé sur le bord latéral de l'assise principale 21 du côté où est située l'échancrure 215, à droite dans l'exemple illustré. Ce résultat est obtenu en définissant les glissières 213 pour guider l'élément d'extension 40 suivant une trajectoire sensiblement tangente au bord de l'assise principale comme cela est illustré par la succession des positions dudit élément d'extension et de ladite assise principale représentées sur les figures 3b, 5b et 6b.

La disposition ainsi obtenue de l'élément d'extension lorsque le siège est dans une position lit permet d'élargir localement la surface de couchage au profit d'un confort amélioré de l'occupant du fauteuil.

Le mouvement de l'élément d'extension tel qu'il se déduit de la description supra est en outre réversible de sorte que, lorsque le fauteuil est replacé dans la position siège, l'élément d'extension 40 reprend sa position initiale dans l'échancrure 215 de l'assise principale 210 pour reconstituer une assise conventionnelle.

Le mouvement de l'élément d'extension 40 peut être assuré par tout dispositif adapté, actif ou passif.

Dans une forme de réalisation non représentée, un actionneur tel qu'un actionneur électrique ou pneumatique, avantageusement situé sous l'assise 21 ou dans une épaisseur d'une structure de l'assise, prenant appui sur un support lié à l'assise principale 210, déplace l'élément d'extension 40 par rapport à ladite assise principale en fonction de la position de l'assise fournie par un capteur.

Dans une autre forme de réalisation, au moins un ressort de rappel, non représenté, tend à ramener en permanence l'élément d'extension 40 dans l'échancrure 215 de l'assise principale et l'effort exercé lors du déplacement de l'assise par la résistance rencontrée par ledit élément d'extension, lorsque le bord avant 43 dudit élément d'extension est en butée contre la structure du fauteuil 10P situé en avant, retient ledit élément d'extension, pendant que l'assise principale 210 continue à être déplacée vers l'avant, qui est guidé dans son déplacement relatif par rapport à ladite assise principale par les gorges 213 dans lesquelles circulent les galets 42 ou les patins. Cette solution suppose un contact effectif entre l'élément d'extension 40 et la structure du fauteuil 10P situé en avant, qui nécessite donc des précautions, par exemple la mise en place d'un blindage local, pour éviter un marquage et une usure précoce des surfaces mises en contact, mais présente l'avantage, outre la simplicité mécanique, de s'adapter à la présence d'un obstacle imprévu, par exemple la main de l'occupant du fauteuil qui serait prise entre les surfaces devant entrer en contact. Dans ce cas, un ressort d'une force modérée limite le désagrément possible pour l'occupant du fauteuil.

Dans une variante de cette dernière forme de réalisation, un dispositif limiteur détermine une position avancée maximale de l'élément d'extension 40, dans un repère local absolu dans lequel la structure du fauteuil 10P en avant formant obstacle est fixe, et qui agit sur ledit élément d'extension avant que ce dernier ne soit en contact avec la structure du fauteuil en avant, par exemple pour maintenir un jeu constant, avantageusement de l'ordre de quelques millimètres à vingt cinq millimètres, lorsque l'assise principale continue de progresser vers l'avant pour accoster le caisson latéral.

Un tel dispositif limiteur comporte par exemple une butée, fixe dans le repère local absolu, sur laquelle une partie de l'élément d'extension ou de son support vient butter.

Dans une autre forme de réalisation, un câble, fixé à une première extrémité sur une partie du fauteuil fixe dans le repère local absolu et fixé à une seconde extrémité à l'élément d'extension 40 ou au support 41, est agencé pour limiter la position vers l'avant dudit élément d'extension en exerçant une traction vers l'arrière lorsque la position la plus avant souhaitée est atteinte.

Dans tous les modes de réalisation passifs, i.e. ne mettant pas en oeuvre d'actionneur commandé, l'élément d'extension reprend sa position dans l'échancrure de l'assise principale, lorsque le fauteuil est ramené dans la position siège, sous l'effet du ou des ressorts de rappel.

L'homme du métier sera en mesure de définir d'autres solutions techniques conventionnelles pour autant que les fonctions de limiter la position avant de l'élément d'extension en déplaçant latéralement ledit élément d'extension sur un bord latéral de l'assise et de rappeler ledit élément d'extension vers l'avant de l'assise en fonction des mouvements de l'assise soient assurées.

L'homme du métier adaptera également la solution exposée en fonction d'éventuelles particularités des fauteuils qui peuvent comporter des accessoires tels qu'un repose jambes solidaire du fauteuil ou du caisson latéral du fauteuil situé devant.

Comme il a été décrit, la trajectoire suivie par l'élément d'extension a pour but d'éviter une interférence mécanique entre l'assise et une structure fixe devant le siège, de combler l'échancrure formée dans l'assise principale pour éviter ladite structure fixe en reconstituant une assise de forme conventionnelle dans la position assis du fauteuil, et d'étendre latéralement une surface de l'assise dans la position lit du fauteuil.

De manière approximative, l'échancrure 215 formée dans l'assise principale 210 présente un profil qui correspond en creux à l'obstacle pouvant provoquer une interférence mécanique et l'élément d'extension s'apparente, sur le plan de la forme géométrique en vue de dessus, à une partie découpée d'une assise conventionnelle pour former l'assise principale.

La forme de réalisation illustrée met en oeuvre des gorges 213 de guidage de l'assise principale 210 et des galets 42 ou patins du support 41 de l'élément d'extension 40 pour définir la trajectoire suivie par ladite extension latérale qui, dans le cas illustré, suit en reculant :
- une première partie de trajectoire qui guide l'élément d'extension sensiblement en translation suivant une direction vers l'arrière et vers l'extérieure, sensiblement parallèle à une ligne de séparation de l'assise principale et de l'élément d'extension ;
- une deuxième partie de trajectoire qui guide l'élément d'extension en rotation pour amener le bord dudit élément d'extension en vis-à-vis de l'assise principale parallèle à un bord latéral de ladite assise principale ;
- une troisième partie de trajectoire qui guide l'élément d'extension sensiblement en translation suivant une direction vers l'arrière, sensiblement parallèle à un bord latéral de l'assise principale.

D'autres formes de réalisation permettent d'obtenir un résultat équivalent pour guider le déplacement de l'élément d'extension, par exemple des systèmes à bielles rigides articulées, associées ou non à des glissières et ou à des actionneurs.

Par exemple, l'élément d'extension est monté coulissant sur un rail en liaison pivot avec l'assise principale, solution non représentée, et un pion ou une butée fixée à l'assise principale pousse latéralement l'élément d'extension lors de son déplacement relatif vers l'arrière de l'assise principale.

La description détaillée est illustrée à partir du cas simple d'un fauteuil 10 situé en arrière d'un autre fauteuil 10P, dont les axes longitudinaux sont décalés latéralement. Bien évidemment cette configuration peut se présenter pour les différents fauteuils agencés suivant des rangs successifs dans la direction longitudinale X, sans être limité à trois rangs comme dans l'illustration de la figure 2b.

En outre l'aménagement des fauteuils dans une cabine n'est pas limité au cas de rang de fauteuils ne comportant chacun qu'un seul fauteuil, comme le montre la figure 2b, et dans lequel le risque d'occurrence d'une interférence de l'assise avec une structure du fauteuil en avant existe.

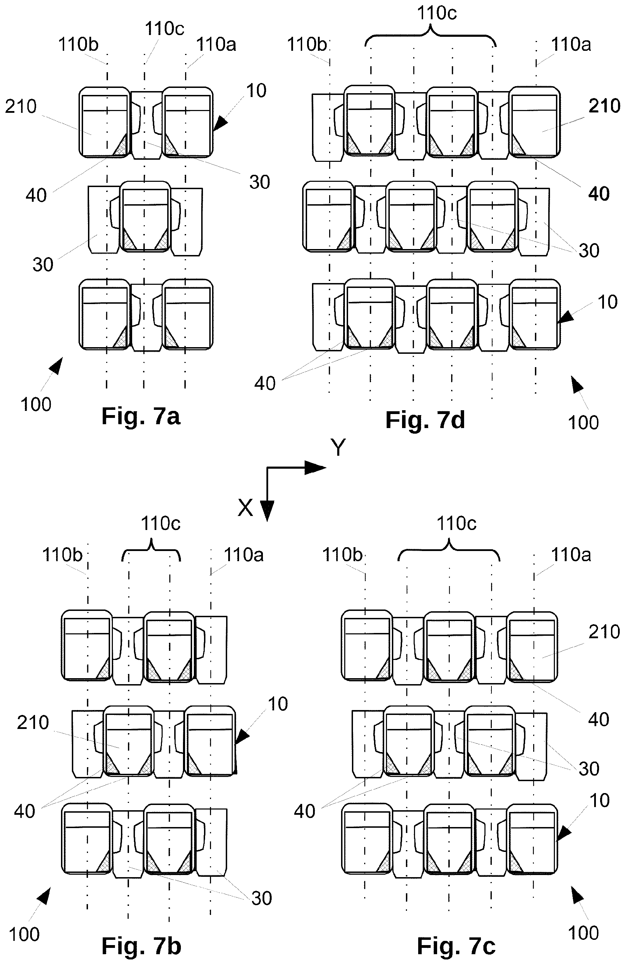

A titre d'exemples, les figures 7a à 7d montrent d'autres agencements d'ensemble de fauteuils en quinconce dans lequel l'invention s'applique.

La figure 7a illustre un ensemble en rang successifs de 2/1/2 fauteuils sur trois lignes, la figure 7b illustre un ensemble en rangs successifs de trois fauteuils sur quatre lignes, la figure 7c illustre un ensemble de 3/2/3 fauteuils sur cinq lignes, et la figure 7c illustre un ensemble en rang successifs de trois fauteuils sur six lignes.

Il sera noté dans ces derniers exemples d'ensembles de sièges que les fauteuils appartenant à une ligne 10c bordée de chaque côté par une autre ligne, c'est-à-dire autre qu'une ligne 10a, 10b sur un bord du dit ensemble, présentent des occurrences d'interférences sur les deux côtés latéraux de leurs assises. Dans ce cas les assises 21 concernées comportent des assises principales 210 avec deux échancrures 215, agencées sensiblement symétriquement par rapport à l'axe longitudinal de l'assise, et deux éléments d'extension 40 correspondant auxdites deux échancrures.

Dans ces ensembles, le fait qu'une partie siège de certains fauteuils soit située entre deux caissons latéraux ou qu'un caisson latéral de certains fauteuils soit situé entre deux parties siège ne modifie pas le problème technique qui est résolu par l'invention.

L'invention permet ainsi d'optimiser l'utilisation de l'espace dans une cabine en associant à un agencement en quinconce des sièges un fauteuil dont le siège comporte un élément d'extension qui gère de manière optimale la présence de l'obstacle formé par le fauteuil en avant en créant une surface de couchage supplémentaire dans la position lit ou repos du fauteuil et sans risque pour l'utilisateur du siège.

## Revendications

1. Ensemble (100) comportant une pluralité de fauteuils (10, 10P) agencés en rangs décalés entre eux suivant une direction longitudinale X et en lignes (110a, 110b, 110c) parallèles à la direction longitudinale X, dans lequel ensemble tous les fauteuils sont orientés sensiblement suivant la direction longitudinale X, dans lequel ensemble les fauteuils (10) d'un rang sont agencés sur des lignes décalées par rapport aux lignes sur lesquelles sont agencés les fauteuils (10P) d'un autre rang le suivant immédiatement dans l'ensemble de sorte que les fauteuils de l'ensemble sont agencés en quinconce, dans lequel ensemble au moins un fauteuil (10) comporte une position siège et au moins une position repos ou lit dans laquelle position repos ou lit une assise (21) dudit fauteuil est avancée suivant la direction longitudinale X par rapport à la position siège,
**caractérisé en ce que** l'assise (21) dudit fauteuil (10) comporte :
- une assise principale (210), solidaire d'une structure porteuse du fauteuil (10), comportant au moins une échancrure (215) sur un bord latéral de ladite assise principale et située dans une partie avant de ladite assise principale ;
- au moins une extension latérale (40), solidaire de l'assise principale (210), comportant :
+ une première position dans laquelle l'extension latérale (40) occupe l'emplacement de l'au moins une échancrure (215) lorsque le fauteuil (10) est en position siège, et ;
+ au moins une seconde position dans laquelle ladite extension latérale est située contre le bord latéral de l'assise principale (210) du côté de ladite assise principale comportant l'au moins une échancrure (40), ladite seconde position étant reculée par rapport à la première position relativement à ladite assise principale, lorsque le fauteuil (10) est dans une position repos ou lit.

2. Ensemble suivant la revendication 1 dans lequel une découpe de l'au moins une échancrure (215) correspond, en creux, sensiblement à une forme d'une zone d'engagement d'une structure arrière d'un fauteuil (10P) du rang immédiatement devant, lorsque l'assise (21) est dans une position avancée maximale, de sorte qu'un jeu positif ou nul est maintenu entre l'assise principale (210) et ladite structure arrière dans ladite position avancée maximale.

3. Ensemble suivant la revendication 2, dans lequel la zone d'engagement correspond à une partie d'une structure d'habillage du fauteuil (10P) du rang immédiatement devant.

4. Ensemble suivant la revendication 2 ou la revendication 3, dans lequel, lorsque l'assise (21) est dans la position avancée maximale, un bord avant (211) de l'assise principale (210), ou un bord avant d'un repose jambes associé à la dite assise principale, accoste une partie arrière de la structure d'un caisson latéral (30P) d'un fauteuil (10P) du rang immédiatement devant.

5. Ensemble suivant l'une des revendications 2, 3 ou 4, dans lequel lorsque l'assise (21) est dans une position avancée maximale, l'élément d'extension (40) forme une extension latérale de l'assise du fauteuil (10).

6. Ensemble suivant l'une des revendications 2 à 5 dans lequel la position avancée maximale est obtenue dans la configuration lit du fauteuil (10).

7. Ensemble suivant l'une des revendications précédentes comportant un dispositif de guidage des mouvements de l'au moins un élément d'extension (40), lequel dispositif de guidage détermine les déplacements dudit élément d'extension par rapport à l'assise principale (210) entre la première position et la seconde position dudit élément d'extension.

8. Ensemble suivant la revendication 7 dans lequel le dispositif de guidage comporte des moyens de rappel élastique entre l'assise principale (210) et l'élément d'extension (40), maintenant ledit élément d'extension dans la première position en absence d'un autre effort appliqué audit élément d'extension.

9. Ensemble suivant la revendication 7 ou la revendication 8 dans lequel le dispositif de guidage comporte une ou des glissières de guidage (213) solidaires de l'assise principale (210) dans lesquelles circulent des galets (42) ou patins solidaires de l'élément d'extension (40), l'agencement desdites glissières et desdits galets ou patins déterminant une trajectoire de l'élément d'extension (40) par rapport à l'assise principale (210) entre la première position et la seconde position dudit élément d'extension.

10. Ensemble suivant la revendication 9 dans lequel les glissières (213) sont fixes par rapport à l'assise principale (210) et déterminent la trajectoire de l'élément d'extension (40) par des formes desdites glissières.

11. Ensemble suivant la revendication 9 dans lequel une glissière est fixée par un point pivot à l'assise principale (210).

12. Ensemble suivant l'une des revendications 7 à 11 dans lequel l'élément d'extension (40) est libre de se déplacer de la première position vers la seconde position sous l'effet d'une force extérieure orientée vers l'arrière, appliquée sur un bord avant (43) dudit élément d'extension.

13. Ensemble suivant l'une des revendications 7 à 11 dans lequel le dispositif de guidage comporte au moins un câble ou une bielle agencé pour limiter, dans un repère absolu de l'ensemble, le déplacement vers l'avant de l'élément d'extension (40) en deçà d'une position prédéfinie lorsque l'assise principale (210) est déplacée vers l'avant.

14. Ensemble suivant l'une des revendications précédentes dans lequel l'assise principale (210) comporte deux échancrures (40) agencées sensiblement symétriquement par rapport à un axe longitudinal de l'assise, et ladite assise comporte deux éléments d'extension (40), correspondant chacun à une des échancrures de ladite assise principale.

15. Ensemble suivant l'une des revendications précédentes, dans lequel les fauteuils (10, 10P) sont agencés en quinconce suivant deux lignes (110a, 110b) parallèles et en rangs comportant un seul fauteuil, les assises (21) desdits fauteuils comportant une échancrure (40) alternativement d'un côté droit et d'un côté gauche de l'assise (21), pour chaque fauteuil (10) du côté du dossier (23) du fauteuil (10P) du rang immédiatement devant.

16. Ensemble suivant l'une des revendications 1 à 14, dans lequel les fauteuils (10) sont agencés en quinconce suivant 3 lignes (10a, 10b, 10c) ou plus parallèles, en rangs comportant N fauteuils, N égal ou supérieur à deux, alternés avec des rangs comportant N-1 ou N fauteuils, les assises (21) desdits fauteuils comportant :
- une échancrure (40) sur un bord gauche de l'assise principale (210) de ladite assise pour les fauteuils dont la partie siège (20) est situées à une extrémité droite d'un rang ;
- une échancrure (40) sur un bord droit de l'assise principale (210) de ladite assise pour les fauteuils (10) dont la partie siège (20) est située à une extrémité gauche d'un rang ;
- une échancrure (40) sur un bord droit et une échancrure (40) sur un bord gauche de l'assise principale (210) de ladite assise pour les autres fauteuils (10), le cas échéant.
